# FASCICULE DE BREVET EUROPEEN

(11) **EP 2 274 233 B1**
(45) Date de publication et mention de la délivrance du brevet: **19.09.2018**
(21) Numéro de dépôt: 09745907.7
(22) Date de dépôt: 28.04.2009
(51) Int. Cl.: B01J 8/22, C01B 3/34, C01B 3/38, B01J 19/00, C01B 3/44, C01B 3/48, F23C 10/00

(54) **PROCÉDÉ DE COMBUSTION EN BOUCLE CHIMIQUE DE FRACTIONS HYDROCARBONÉES LIQUIDES LOURDES**
CHEMISCHES LOOPING-VERFAHREN ZUR VERBRENNUNG SCHWERER FLÜSSIGER KOHLENWASERSTOFFFRAKTIONEN
CHEMICAL LOOPING PROCESS FOR THE COMBUSTION OF HEAVY LIQUID HYDROCARBON FRACTIONS

(30) Priorité: 30.04.2008 FR 0802450
(43) Date de publication de la demande: 19.01.2011
(73) Titulaire: IFP Energies nouvelles, 92500 Rueil-Malmaison (FR); TOTAL RAFFINAGE CHIMIE, 92400 Courbevoie (FR)
(72) Inventeur: FORRET, Ann, F-69420 Longes (FR); PELLETANT, William, F-69230 Saint-Genis-Laval (FR); HOTEIT, AIi, F-69003 Lyon (FR)
(86) Numéro de dépôt international: PCT/FR2009/000498
(87) Numéro de publication internationale: WO 2009/138588

(56) Documents cités:
- WO-A-2007/082089
- WO-A-2008/036902
- FR-A- 2 227 315
- US-A1- 2005 175 533
- "Composition et caractéristiques de certains produits pétroliers" JOURNAL OFFICIEL DE LA REPUBLIQUE FRANCAISE, 27 septembre 1967 (1967-09-27), XP002507514

## Description

### DOMAINE DE L'INVENTION

L'invention concerne la mise en contact de charges liquides lourdes avec des particules solides capables de céder de l'oxygène dans une zone réactionnelle de réduction. L'oxygène cédé par les particules permet de faire la combustion de la charge liquide. Les effluents de la zone de combustion contiennent essentiellement des oxydes gazeux résultant de la combustion, et de la vapeur d'eau. Les particules ayant participé à la combustion sont ensuite évacuées vers une zone réactionnelle d'oxydation où elles sont réoxydées par contact à l'air. La circulation en continu des particules oxydées entre les deux zones permet de faire en continu une combustion de la charge liquide en évitant tout contact direct entre la charge liquide et l'air. Ce procédé permet d'effectuer la combustion du combustible en l'absence d'azote et de produire des fumées concentrées en CO2 exemptes d'azote facilitant la séquestration du CO2.

Nous avons découvert que les liquides de type sous-produits pétroliers peuvent être utilisés comme charges pour le procédé de combustion en boucle chimique, afin de les brûler soit totalement et produire du CO2 et de l'eau, soit partiellement et produire du gaz de synthèse composé de CO et H2.

Ce procédé utilisant les charges liquides est particulièrement intéressant, car il permet de valoriser les sous-produits pétroliers afin de produire de la chaleur avec captage du CO2 émis, ou produire du gaz de synthèse.

### EXAMEN DE L'ART ANTERIEUR

### Terminologie

Procédé de Chemical Looping Combustion ou CLC : Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite. Lors de la réduction de la masse oxydo-réductrice, le combustible peut être soit totalement oxydé, produisant du CO2 et H2O, soit partiellement oxydé, produisant du gaz de synthèse CO et H2.

### Art antérieur

Une valorisation des coupes pétrolières lourdes, non distillables dans les conditions atmosphériques, est souvent recherchée.
Une manière connue de valoriser directement les coupes pétrolières non distillables dans les conditions atmosphériques (coupe 340°C+) est de les brûler pour produire de l'énergie. La combustion de ce type de combustibles soulève néanmoins la problématique du captage du CO2 émis dans les fumées, préjudiciable à l'environnement.

Le procédé CLC (Chemical Looping Combustion) ou procédé d'oxydo-réduction en boucle sur masse active consiste à mettre en oeuvre des réactions d'oxydo-réduction d'une masse active pour décomposer la réaction de combustion en deux réactions successives. Une première réaction d'oxydation de la masse active avec de l'air ou un gaz jouant le rôle de comburant, permet, du fait du caractère exothermique de l'oxydation, d'obtenir un gaz chaud dont l'énergie peut ensuite être exploitée. Une seconde réaction de réduction de la masse active ainsi oxydée à l'aide d'un composé réducteur permet ensuite d'obtenir une masse active réutilisable ainsi qu'un mélange gazeux comprenant essentiellement du dioxyde de carbone et de l'eau. Cette technique permet donc d'isoler le dioxyde de carbone dans un mélange gazeux pratiquement dépourvu d'oxygène et d'azote.

Le brevet US 5,447,024 décrit un procédé CLC comprenant un premier réacteur de réduction d'une masse active à l'aide d'un gaz réducteur et un second réacteur d'oxydation permettant de restaurer la masse active dans son état oxydé par une réaction d'oxydation avec de l'air humidifié. La technologie du lit fluidisé circulant est utilisée pour permettre le passage continu de la masse active de son état oxydé à son état réduit.
La masse active passant alternativement de sa forme oxydée à sa forme réduite et inversement, décrit un cycle d'oxydo-réduction. Il convient de noter que, de manière générale, les termes oxydation et réduction sont utilisés en relation avec l'état respectivement oxydé ou réduit de la masse active. Le réacteur d'oxydation est celui dans lequel la masse oxydo-réductrice est oxydée et le réacteur de réduction est le réacteur dans lequel la masse oxydo-réductrice est réduite.

Ainsi, dans le réacteur de réduction, la masse active (MₓO_{y}) est tout d'abord réduite à l'état MₓO_{y-2n-m/2}, par l'intermédiaire d'un hydrocarbure CₙHₘ, qui est corrélativement oxydé en CO₂ et H₂O, selon la réaction (1), ou éventuellement en mélange CO + H₂ selon les proportions utilisées.

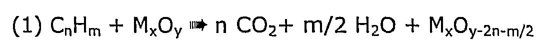

Dans le réacteur d'oxydation, la masse active est restaurée à son état oxydé (MₓO_{y}) au contact de l'air selon la réaction (2), avant de retourner vers le premier réacteur.

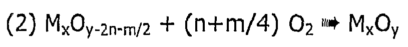

L'efficacité du procédé CLC en lit fluidisé circulant repose dans une large mesure sur les propriétés physico-chimiques de la masse active d'oxydo-réduction. La réactivité du ou des couples oxydo-réducteurs mis en jeu ainsi que la capacité de transfert d'oxygène associée sont des paramètres qui influent sur le dimensionnement des réacteurs et sur les vitesses de circulation des particules. La durée de vie des particules quant à elle dépend de la résistance mécanique des particules ainsi que de leur stabilité chimique. Afin d'obtenir des particules utilisables pour ce procédé, les particules mises en jeu sont généralement composées d'un couple ou d'un ensemble de couples oxydo-réducteurs choisi parmi CuO/Cu, Cu₂O/Cu, NiO/Ni, Fe₂O₃/Fe₃O₄, FeO/Fe, Fe₃O₄/FeO, MnO₂/Mn₂O₃, Mn₃O₃/Mn₃O₄, Mn₃O₄/MnO, MnO/Mn, Co₃O₄/CoO, CoO/Co, et d'un liant apportant la stabilité physico-chimique nécessaire.

De nombreuses études avec des charges gaz (essentiellement méthane) et des charges solides ont été menées et ont montré la faisabilité de la boucle chimique de combustion pour ce type de charges.
Pour les charges gaz, une chimie réactive directe a lieu entre les particules solides oxydées et le combustible. Pour les charges solides, il faut d'abord les gazéifier (en gaz de synthèse CO et H2) pour permettre leur conversion au contact de la masse oxydo-réductrice. La gazéification représente donc l'étape limitante temporellement. Aussi, pour augmenter le temps de résidence de la charge solide, la fraction non convertie issue du réacteur de réduction est séparée de la masse oxydo-réductrice (par différence de densité entre la charge solide et la masse oxydo-réductrice via un séparateur solide/solide - brevet 2 896 709) pour être recyclée.

La demande de brevet WO 2008/036902 A2 décrit le procédé CLC appliqué de manière générale à diverses charges: gazeuses, liquides et solides. L'utilisation des charges liquides lourdes, produits du raffinage qui ont la particularité de ne pas être distillables dans les conditions atmosphériques, n'est pas envisagée.

L'utilisation de combustibles liquides génère des difficultés supplémentaires de mise en oeuvre que l'on ne rencontre pas pour les charges gazeuses ou solides, à savoir la vaporisation de la charge au contact des masses oxydo-réductrices ainsi que la formation de coke autour des particules oxydo-réductrices. Contrairement aux charges solides, il n'est pas envisageable de séparer les imbrûlés (coke déposé sur la masse oxydo-réductrice) de la masse oxydo-réductrice pour un recycle dans le réacteur de réduction (différences de densité et de taille de particules trop faibles). Le temps de séjour de la charge liquide dans ce réacteur est avantageusement rigoureusement contrôlé pour garantir l'oxydation de la charge vaporisée ainsi que la gazéification du coke formé et son oxydation, ceci afin d'obtenir le niveau d'oxydation désiré en une passe.
Nous avons découvert que la combustion de charges liquides lourdes pouvait se faire dans un procédé de type Chemical Looping Combustion, par mise en contact de la charge liquide avec une masse oxydo-réductrice en lit fluidisé, afin de valoriser les fractions pétrolières liquides lourdes du raffinage, tout en évitant la problématique des fumées riches en CO2.

### OBJETS DE L'INVENTION

L'objet de l'invention est d'utiliser le procédé de boucle chimique de combustion pour valoriser des charges liquides lourdes, soit afin de produire de l'énergie en oxydant totalement les charges liquides lourdes, tout en permettant le captage direct du CO2 émis dans les fumées de combustion, soit afin de produire un gaz de synthèse (composé d'hydrogène et de monoxyde de carbone).

### DESCRIPTION DE L'INVENTION

L'invention consiste à mettre en contact une charge liquide lourde, c'est-à-dire ayant moins de 10% en volume de ses composants dont le point d'ébullition en conditions atmosphériques est inférieur à 340°C, avec une masse oxydo-réductrice en lit fluidisé afin d'en effectuer la combustion dans un procédé de type Chemical Looping.

### Résumé de l'invention

L'invention concerne un procédé tel que divulgué dans la présente revendication 1. Les modes de réalisation préférés sont présentés dans les revendications dépendantes. De préférence, la charge liquide comprend un résidu de distillation sous vide. Avantageusement, la charge liquide est atomisée au sein du lit fluidisé.

De préférence, la température du lit fluidisé est comprise entre 700°C et 1200°C.

Dans un mode de réalisation, on effectue une combustion partielle de la charge.

Dans ce cas, on produit du gaz de synthèse.

Le gaz permettant la fluidisation peut comprendre de la vapeur d'eau, et le procédé permet de produire un mélange gazeux CO₂ + H2.

Dans un autre mode de réalisation, on effectue une combustion totale de la charge.

Dans ce cas, le procédé permet à la fois la production d'énergie et la captation du CO2 émis.

### Description détaillée de l'invention

### Procédé:

La mise en oeuvre du procédé de Chemical Looping est faite à l'aide d'un lit fluidisé circulant, utilisant deux réacteurs interconnectés. Dans le premier, réacteur d'oxydation, la masse oxydo-réductrice s'oxyde au contact de l'air. Après séparation de la masse oxydée et de l'air appauvri en oxygène, la masse oxydo-réductrice est injectée dans le second réacteur, la chambre de combustion ou réacteur de réduction. Le combustible injecté y consomme l'oxygène du porteur (réduction de la masse oxydo-réductrice) pour s'oxyder en un mélange principalement composé de CO2 et d'eau, facilement séparables. La masse réduite est ensuite réinjectée dans le premier réacteur pour suivre un nouveau cycle.

La mise en oeuvre de ce procédé se fait par un lit fluidisé circulant.

Le temps de réaction est compris entre 10 secondes et 10 minutes, préférentiellement entre 1 minute et 5 minutes.

Il est possible de fluidiser la masse oxydo-réductrice avec de la vapeur d'eau, et/ou du CO2 et/ou des composés soufrés SOx comme gaz de fluidisation.

La température de la masse oxydo-réductrice (température du lit) lors de la mise en contact est comprise entre 700 et 1200°C, préférentiellement entre 800 et 1000°C.

En fonction de l'utilisation des gaz de combustion, la pression du procédé sera ajustée. Ainsi, pour effectuer une combustion totale, on aura intérêt à travailler à pression faible pour minimiser le coût énergétique de compression des gaz et maximiser ainsi le rendement énergétique de l'installation. Pour produire du gaz de synthèse, on pourra avantageusement dans certains cas travailler en pression, afin d'éviter la compression du gaz de synthèse en amont du procédé de synthèse aval: le procédé Fischer Tropsch travaillant par exemple à des pressions comprises entre 20 et 40 bars, on pourra trouver un intérêt à produire le gaz à une pression plus élevée.

La capacité de stockage en oxygène de la masse oxydo-réductrice est avantageusement comprise, suivant le type de matériau, entre 4 et 30 % poids. La masse oxydo-réductrice peut être composée d'oxydes métalliques seuls ou en mélange, avec ou sans liant, d'oxydes métalliques-cérine/zircone, de spinelles, de minerai (tel que l'ilménite), de pérovskites, ou toute autre masse ayant les propriétés d'oxydo-réduction requises et les caractéristiques nécessaires à la mise en oeuvre de la fluidisation.

Le taux d'utilisation de l'oxygène disponible varie généralement entre 2 et 50% poids, préférentiellement entre 5 et 20 % poids.

### Injection de la charge

La charge liquide est injectée dans le lit dense du réacteur de réduction. Elle est préférentiellement atomisée au sein du lit fluidisé pour former des gouttelettes de taille proche de la taille des particules, ceci afin d'optimiser le contact liquide-solide. En effet, une partie de la charge liquide se vaporise au contact de la masse oxydo-réductrice chaude, l'autre partie se condense pour former un dépôt de coke à la surface de la masse oxydo-réductrice.

La charge liquide peut être préchauffée, notamment pour diminuer sa viscosité.

Le temps de séjour de la masse oxydo-réductrice est avantageusement au moins égal au temps de réaction de la charge liquide. Le temps de séjour de la masse oxydo-réductrice est compris entre 10 secondes et 10 minutes, préférentiellement entre 1 minute et 5 minutes.

Le rapport entre le débit massique de masse oxydo-réductrice sur le débit massique de charge est avantageusement compris entre 20 et 1000, préférentiellement entre 50 et 400.

### Charges liquides:

Les charges liquides pouvant être utilisées dans ce procédé de boucle chimique de combustion en lit fluidisé concernent toute fraction hydrocarbonée liquide provenant de la production ou du raffinage de pétrole dont le point d'ébullition dans les conditions atmosphériques est majoritairement supérieur à 340°C (c'est-à-dire toute coupe dont la courbe de distillation fait apparaître que moins de 10% en volume de ses composants bout à une température inférieure à 340°C).

Les charges concernées sont notamment les coupes de type résidus atmosphériques (résidus de distillation menée dans les conditions atmosphériques); ou de préférence les coupes de type résidus sous vide (résidus de distillation menée sous vide) pour lesquelles moins de 10% en volume des composants a un point d'ébullition inférieur à 500°C; ou enfin les résidus de procédés de désasphaltage constitués du précipité obtenu après contact avec un solvant paraffinique constitué d'un alcane dont le nombre d'atomes de carbone est compris entre 3 et 7.

La charge contient donc majoritairement des fractions lourdes difficilement convertibles et non intégrables dans les bases carburant, seules ou en mélange, telles que les fuels de soute, les résidus de distillation atmosphériques ou de distillation sous vide, les résidus de procédé de conversion (hydroconversion en lit bouillonnant, FCC...), les asphaltes issus des procédés de désasphaltage, notamment désasphaltage au propane, butane, pentane, hexane, heptane, ou des bitumes (par exemple fractions de bruts lourds du Canada non distillables).

Le pourcentage de résidu solide résultant de la vaporisation et de la pyrolyse d'un produit pétrolier est défini par son carbone Conradson. Le procédé selon l'invention permet de valoriser des charges lourdes ayant un carbone Conradson allant jusqu'à 40%.

De même, le procédé selon l'invention est avantageusement applicable à des charges lourdes ayant une teneur en asphaltènes précipitant dans l'heptane allant jusqu'à 25%.

### Combustion totale ou partielle

Si l'oxydation de la charge liquide est complète, le procédé selon l'invention permet d'obtenir des fumées fortement concentrées en CO2 (pouvant être comprimé, transporté et stocké). Le procédé selon l'invention peut donc être utilisé pour la captation du CO2.

Si l'oxydation de la charge liquide est partielle, le procédé selon l'invention permet de produire du gaz de synthèse (CO et H2).

Dans le cas de la combustion partielle, le ratio masse active/combustible est généralement ajusté de manière à réaliser l'oxydation partielle du combustible, produisant un gaz de synthèse sous forme d'un mélange CO + H₂.

Afin de n'obtenir qu'une oxydation partielle de la charge, on peut également, par rapport aux conditions nécessaires à l'obtention d'une combustion totale par Chemical Looping Combustion:
- diminuer le temps de séjour des particules dans le réacteur d'oxydation (pour ne pas oxyder totalement les particules),
- utiliser une masse oxydo-réductrice ayant une capacité de stockage d'oxygène plus faible,
- diminuer le débit de circulation des oxydes métalliques dans le réacteur d'oxydation
- augmenter le débit de la charge dans le réacteur de réduction.

Ce gaz de synthèse peut être utilisé comme charge d'autres procédés de transformation chimique, par exemple le procédé Fischer Tropsch permettant de produire à partir de gaz de synthèse des hydrocarbures liquides à chaînes hydrocarbonées longues utilisables ensuite comme bases carburants.

Dans le cas où le gaz de fluidisation utilisé est la vapeur d'eau ou un mélange de vapeur d'eau et d'autre(s) gaz, la réaction du gaz CO à l'eau (ou water gas shift en termes anglo-saxons, 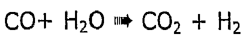 ) peut également avoir lieu, aboutissant à la production d'un mélange CO₂ + H₂ en sortie de réacteur.

Dans ce cas, le gaz de combustion peut être utilisé à des fins de production d'énergie compte tenu de son pouvoir calorifique.

On peut également envisager d'utiliser ce gaz pour la production d'hydrogène, pour par exemple alimenter des unités d'hydrogénation, d'hydrotraitement en raffinage ou un réseau de distribution d'hydrogène (après réaction de water gaz shift).

Dans le cas de la combustion totale, le flux de gaz en sortie du réacteur de réduction est composé essentiellement de CO₂ et de vapeur d'eau. Un flux de CO₂ prêt à être séquestré est ensuite obtenu par condensation de la vapeur d'eau. Le procédé peut ainsi être utilisé pour la production d'énergie, tout en permettant la captation du CO2 contenu dans les fumées.

### Description des figures

Les figures 1 à 4 illustrent l'invention sans en limiter la portée.
**Figure 1** : Schéma de l'installation expérimentale utilisée dans l'exemple. Les sigles suivants concernent :
   Cd : condenseur
   Gf : groupe froid
   Ft : filtre
   An. : analyseur
   FID : Flame Ionization Detector
   GV : générateur de vapeur
   T° : mesure de température
   T_{L}: mesure de température du lit
   T_{F}: mesure de température du four
   P : mesure de pression.
**Figure 2** : Schéma du réacteur utilisé dans l'exemple et détail de la partie permettant l'injection, composée d'un tube central (tc) et d'une partie annulaire (pa).
   an. : analyseur
   F : fritté
   Pt : puits pour thermocouples
**Figure 3** : Schéma du système d'injection utilisant une vanne 6-voies utilisé dans l'exemple, où chacune des voies porte un numéro 1 à 6. L'injection se fait depuis un bac de charge B à l'aide d'une seringue S. La vanne 6 voies permet d'alterner l'injection de charge avec celle du gaz de fluidisation Gf dans le réacteur R, le gaz de fluidisation étant envoyé à l'évent E pendant l'injection de la charge.
**Figure 4** : Graphique montrant le carbone émis en % C sous la forme de CO2 en fonction du temps t en minutes pour les charges fuel domestique FOD et fuel lourd FL n°2 injectées ponctuellement à t = 0, sur NiO/NiAl2O4 à 900°C (exemple).
**Figure 5** **:** Courbe de distillation simulée (DS421) du fuel lourd n°2 de l'exemple (fraction volumique en fonction de la température T en °C).

### Exemple :

L'exemple ci-dessous illustre l'invention à titre non limitatif.

La combustion totale par boucle chimique de différentes charges liquides (fuel domestique : charge non conforme à l'invention et fuel lourd n°2 : charge conforme à l'invention) a été mise en évidence.

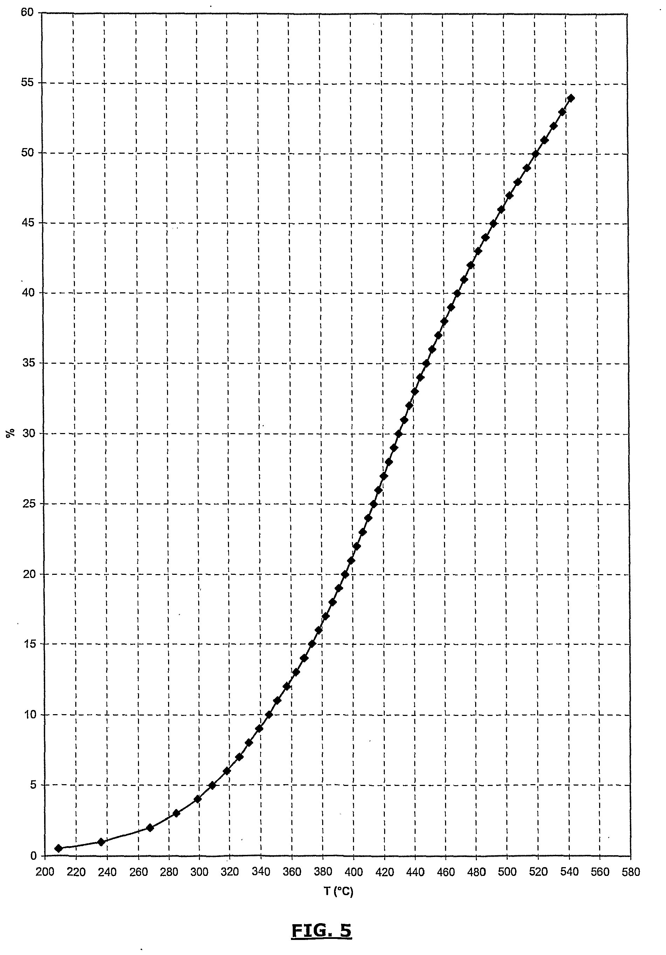

Le fuel lourd n°2 a les caractéristiques suivantes :
densité à 15°C = 0.9858
viscosité cinématique= 38 mm2/s à 100°C
viscosité cinématique= 522 mm2/s à 50°C
Teneur en soufre S=1.3%pds
Teneur en hydrogène H=10.8%pds
Fraction volumique ayant un point d'ébullition inférieur à 340°C : 9% en volume.
La courbe de distillation simulée (DS421) du fuel lourd n°2 (charge conforme à l'invention) est donnée à la figure 5.

A titre comparatif, le fuel domestique a une densité à 15°C de 0.8562, une teneur en soufre de 0.1% pds et une teneur en hydrogène H=12.4% pds. Par ailleurs, la fraction de fuel domestique ayant un point d'ébullition inférieur à 340°C représente 87% en volume.

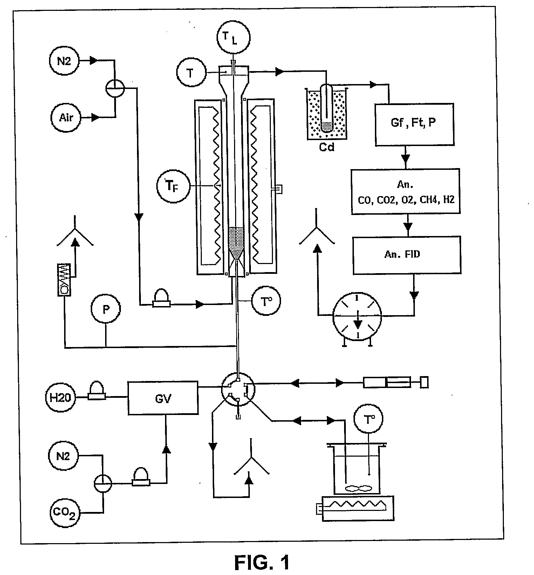

L'outil expérimental utilisé (cf. figure 1) est composé d'un réacteur en quartz contenant un lit fluidisé de masse oxydo-réductrice, un système d'injection liquide dans le réacteur et un système d'analyse des fumées. Le réacteur est en quartz, son diamètre intérieur est de 2 cm. Le réacteur peut être fluidisé par différents gaz (air, azote N2, CO2, H20) et alimenté par différents liquides. Les liquides à tester peuvent être préalablement chauffés jusqu'à 180°C afin de diminuer leur viscosité si besoin, et assurer leur injection dans le réacteur. La masse oxydo-réductrice (45g) forme un lit de particules solides d'oxydes de nickel NiO sur support NiAl2O4 (en proportion 60%poids/40%poids), de granulométrie comprise entre 100 et 300 µm, fluidisé en permanence. Afin d'obtenir une simulation du procédé de Chemical Looping Combustion, on utilise un réacteur opérant en batch avec la masse oxydo-réductrice fluidisée (sans circulation de la masse oxydo-réductrice).

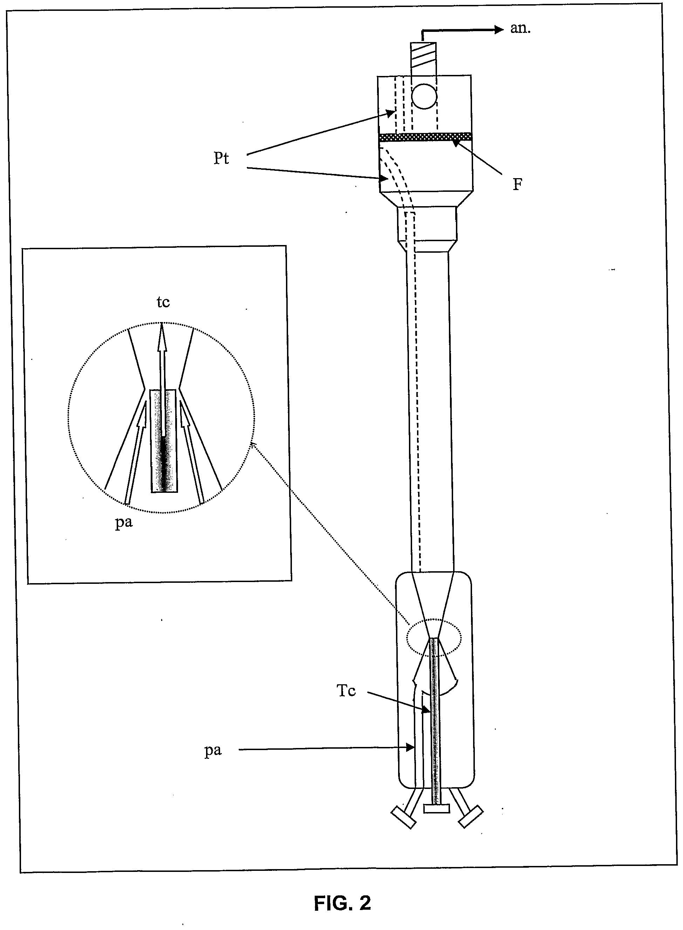

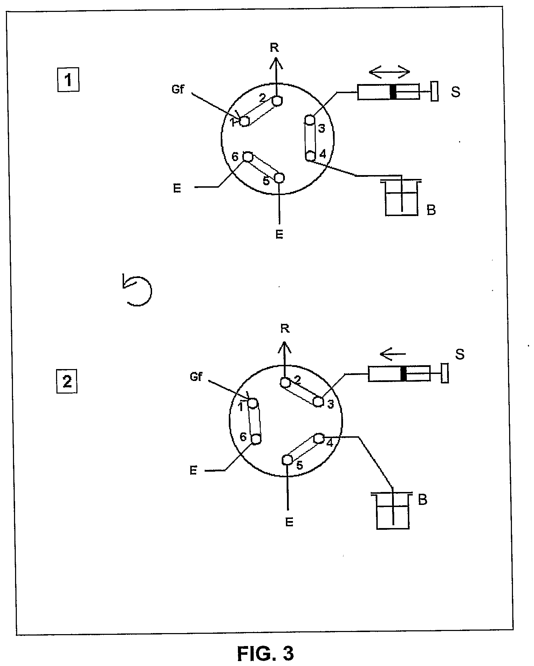

Les oxydes métalliques subissent plusieurs cycles d'oxydation-réduction. Lors de la phase d'oxydation du métal, le lit est fluidisé à l'air. Lors de la phase de réduction du métal, une quantité définie de charge liquide (2 mL) est injectée ponctuellement dans le lit de particules solides, le lit étant alors fluidisé par de l'azote. Le débit de gaz de fluidisation dans le réacteur est réparti équitablement en deux zones (cf. figure 2) : par le tube central (30 NL/h) et par la partie annulaire (30 NL/h).
Une vanne 6-voies, un bac de charge liquide B et une seringue S sont utilisés afin d'injecter ponctuellement la charge dans le réacteur. Le protocole d'injection est décrit sur la figure 3. La seringue S est au préalable remplie par la charge liquide (position 1 de la vanne 6-voies, remplissage de la seringue S). Lors de la phase d'oxydation de la masse oxydo-réductrice, la vanne est en position 1, le liquide contenu dans la seringue S étant poussé vers le bac de charge B; le lit est fluidisé par le gaz de fluidisation Gf qui est de l'air (30 NL/h dans le tube centrale et 30 NL/h dans la partie annulaire).
Une fois le métal totalement oxydé (l'oxygène de l'air étant totalement restitué à la sortie du réacteur), l'air de fluidisation Gf est remplacé par de l'azote. Lors de la phase de réduction de la masse oxydo-réductrice, la vanne est basculée en position 2, durant le temps d'injection de la charge (durée : deux secondes). Le liquide, poussé par la seringue, est alors orienté vers le réacteur R par le tube central; le lit est fluidisé par l'azote (30 NL/h dans la partie annulaire). Après la durée programmée de l'injection, la vanne bascule à nouveau en position 1. Le lit est alors fluidisé par l'azote passant dans le tube central et la partie annulaire; la charge liquide poussée par la seringue étant orientée vers le bac de charge. Les fumées sont analysées en continu par un Analyseur multi gaz NGA 2000 MLT4 (An. CO, CO2, O2, CH4, H2) pour mesures en CO / CO2 / CH4 / O2 / H2. Un appareillage de type FID (Flame Ionization Detector : An. FID) permet également la mesure de la concentration en carbone total.

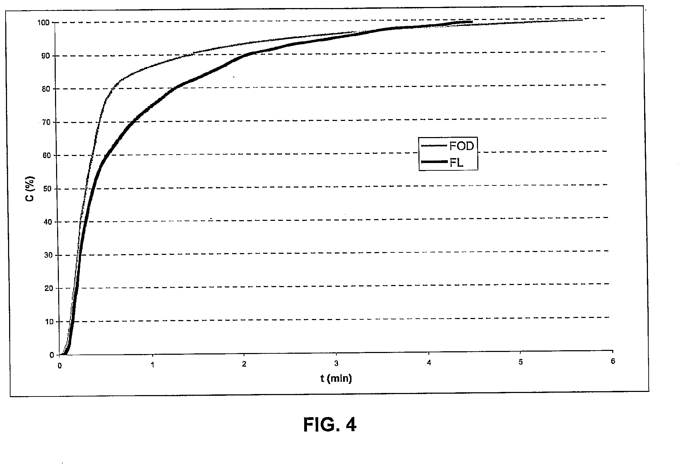

Les deux charges liquides décrites ci-dessus ont été testées : du fuel domestique et du fuel lourd n° 2. L'oxyde de nickel de la masse oxydo-réductrice est au préalable totalement oxydé. La température du lit (T_{L}) lors de l'injection des différentes charges liquides est de 900°C. La figure 4 montre le pourcentage de carbone émis dans les fumées sous forme de CO2 en fonction du temps; deux mL de charge liquide étant injectés en deux secondes à t = 0. On observe que la quasi totalité du carbone contenu dans les deux charges liquides testées (>99%w) est convertie en CO2. La réaction de réduction de l'oxyde de nickel étant endothermique, une baisse de température du lit d'environ 30°C est observée avec les deux charges. Lors de la ré-oxydation du métal, une quantité limitée de CO2 est émise (< 1% poids du carbone contenu dans la charge injectée), ce qui montre qu'il n'y a pas ou très peu de coke résiduel sur la masse oxydo-réductrice. L'exothermicité observée lors de l'oxydation du métal génère une augmentation de la température du lit d'environ 30°C. Ces expériences montrent la faisabilité du procédé de boucle chimique de combustion appliqué aux charges liquides lourdes (comme le fuel lourd n°2 testé), et notamment aux résidus pétroliers.

Avec l'outil expérimental décrit dans l'exemple, la combustion partielle par boucle chimique peut être effectuée de manière similaire pour la production de gaz de synthèse, par exemple en diminuant la quantité d'oxygène stocké dans les oxydes métalliques.

Cette expérience montre qu'en jouant sur la quantité d'oxygène disponible stockée dans les oxydes métalliques, le procédé CLC peut être utilisé soit pour la production d'énergie tout en captant le CO2 émis dans les fumées (combustion totale, degré d'oxydation du métal élevé), soit pour la production de gaz de synthèse (combustion partielle, degré d'oxydation du métal faible).

## Revendications

1. Procédé de valorisation d'une charge liquide composée de fractions hydrocarbonées, seules ou en mélange, dont moins de 10 % en volume a un point d'ébullition inférieur à 340°C par combustion en boucle chimique d'oxydoréduction en lit fluidisé, dans lequel :
a) on oxyde une masse oxydo-réductrice au contact de l'air dans un réacteur d'oxydation;
b) on sépare la masse oxydée de l'air appauvri en oxygène;
c) on réduit la masse oxydée dans un réacteur de réduction ou combustion et on oxyde la charge liquide pour former un mélange principalement composé de CO2 et d'eau;
d) on réinjecte la masse réduite dans le réacteur d'oxydation de l'étape a) pour commencer un nouveau cycle.
le temps de séjour de la masse oxydo-réductrice dans le réacteur de combustion étant compris entre 10 secondes et 10 minutes.

2. Procédé de valorisation d'une charge liquide selon la revendication 1 dans lequel le temps de séjour est compris entre 1 et 5 minutes.

3. Procédé de valorisation d'une charge liquide selon la revendication 1 ou 2 dans lequel la charge liquide comprend un résidu de distillation sous vide.

4. Procédé de valorisation d'une charge liquide selon la revendication 1 à 3 dans lequel la charge liquide est atomisée au sein du lit fluidisé.

5. Procédé de valorisation d'une charge liquide selon l'une des revendications précédentes dans lequel la température du lit fluidisé est comprise entre 700°C et 1200°C.

6. Procédé de valorisation d'une charge liquide selon l'une des revendications précédentes par combustion partielle de la charge.

7. Procédé de valorisation d'une charge liquide selon la revendication 6 dans lequel on produit du gaz de synthèse.

8. Procédé de valorisation d'une charge liquide selon la revendication 6 dans lequel le gaz permettant la fluidisation comprend de la vapeur d'eau et dans lequel on produit, après réaction du gaz CO à l'eau, un mélange gazeux CO2 + H2 en sortie de réacteur.

9. Procédé de valorisation d'une charge liquide selon l'une des revendications 1 à 5 par combustion totale de la charge.

10. Procédé de valorisation d'une charge liquide selon la revendication 9 par production d'énergie et captation du CO2 émis.

## Patentansprüche

1. Verfahren zur Gewinnung eines flüssigen Charge, die aus Kohlenwasserstofffraktionen besteht, allein oder im Gemisch, wovon weniger als 10 Vol.-% einen Siedepunkt unterhalb von 340 °C haben, durch reduktive/oxidative Chemical-Looping-Combustion in der Wirbelschicht, wobei:
a) eine Redox-Masse beim Kontakt mit Luft in einem Oxidationsreaktor oxidiert wird;
b) die oxidierte Masse von der sauerstoffarmen Luft getrennt wird;
c) die oxidierte Masse in einem Reduktions- oder Verbrennungsreaktor reduziert wird und die flüssige Charge oxidiert wird, um ein Gemisch zu bilden, das hauptsächlich aus CO2 und Wasser besteht;
d) die reduzierte Masse in den Oxidationsreaktor aus Schritt a) reinjiziert wird, um einen neuen Zyklus zu beginnen,
wobei die Verweilzeit der Redox-Masse in dem Verbrennungsreaktor im Bereich zwischen 10 Sekunden und 10 Minuten liegt.

2. Verfahren zur Gewinnung einer flüssigen Charge nach Anspruch 1, wobei die Reaktionszeit im Bereich zwischen 1 und 5 Minuten liegt.

3. Verfahren zur Gewinnung einer flüssigen Charge nach Anspruch 1 oder 2, wobei die flüssige Charge einen Vakuumdestillationsrückstand umfasst.

4. Verfahren zur Gewinnung einer flüssigen Charge nach Anspruch 1 bis 3, wobei die flüssige Charge innerhalb der Wirbelschicht zerstäubt wird.

5. Verfahren zur Gewinnung einer flüssigen Charge nach einem der vorhergehenden Ansprüche, wobei die Temperatur der Wirbelschicht im Bereich zwischen 700 °C und 1.200 °C liegt.

6. Verfahren zur Gewinnung einer flüssigen Charge nach einem der vorhergehenden Ansprüche durch teilweises Verbrennen der Charge.

7. Verfahren zur Gewinnung einer flüssigen Charge nach Anspruch 6, wobei Synthesegas hergestellt wird.

8. Verfahren zur Gewinnung einer flüssigen Charge nach Anspruch 6, wobei das Gas, das die Fluidisierung ermöglicht, Wasserdampf umfasst, und wobei nach Umsetzung des CO-Gases mit Wasser ein gasförmiges CO2+H2-Gemisch am Reaktorausgang erzeugt wird.

9. Verfahren zur Gewinnung einer flüssigen Charge nach einem der Ansprüche 1 bis 5 durch vollständiges Verbrennen der Charge.

10. Verfahren zur Gewinnung einer flüssigen Charge nach Anspruch 9 durch Erzeugen von Energie und Einfangen des emittierten CO2.

## Claims

1. A method for upgrading a liquid feed consisting of hydrocarbon fractions, alone or in admixture, less than 10 vol.% of which have a boiling point temperature below 340°C, by fluidized-bed redox chemical looping combustion, comprising:
a) oxidizing a redox mass on contact with air in an oxidation reactor;
b) separating the oxized redox mass and the oxygen depleted air;
c) reducing the oxized redox mass in a reduction or combustion and oxidizing the liquid feed to produce a mixture mainly made up of CO₂ and;
d) reinjecting the reduced redox mass into the oxidation reactor at stage a) to follow a new cycle;
the residence time of the redox mass in the combustion reactor ranging between 10 seconds and 10 minutes.

2. A method for upgrading a liquid feed as claimed in claim 1, wherein the residence time ranges between 1 and 5 minutes.

3. A method for upgrading a liquid feed as claimed in claim 1 or 2, wherein the liquid feed comprises a vacuum distillation residue.

4. A method for upgrading a liquid feed as claimed in any one of claims 1 to 3, wherein the liquid feed is atomized within the fluidized bed.

5. A method for upgrading a liquid feed as claimed in any one of the previous claims, wherein the temperature of the fluidized bed ranges between 700°C and 1200°C.

6. A method for upgrading a liquid feed as claimed in any one of the previous claims by partial combustion of the feed.

7. A method for upgrading a liquid feed as claimed in claim 6, wherein synthesis gas is produced.

8. A method for upgrading a liquid feed as claimed in claim 6, wherein the gas allowing fluidization comprises steam and wherein, after water-gas shift reaction, a CO₂ + H₂ mixture is produced at the reactor outlet.

9. A method for upgrading a liquid feed as claimed in any one of claims 1 to 5 by total combustion of the feed.

10. A method for upgrading a liquid feed as claimed in claim 9 by energy production and capture of the CO₂ emitted.
